# EUROPÄISCHE PATENTSCHRIFT

(11) **EP 2 252 647 B1**
(45) Veröffentlichungstag und Bekanntmachung des Hinweises auf die Patenterteilung: **04.04.2012**
(21) Anmeldenummer: 09718691.0
(22) Anmeldetag: 26.02.2009
(51) Int. Cl.: C08G 69/02, C08G 69/40, C08G 69/44

(54) **POLYAMID-ELASTOMER**
POLYAMIDE ELASTOMER
ÉLASTOMÈRE DE POLYAMIDE

(30) Priorität: 13.03.2008 EP 08102562
(43) Veröffentlichungstag der Anmeldung: 24.11.2010
(73) Patentinhaber: EMS-Patent AG, 7013 Domat/Ems (CH)
(72) Erfinder: BAYER, Andreas, CH-7013 Domat/Ems (CH); HOFFMANN, Botho, CH-7013 Domat/Ems (CH)
(74) Vertreter: Bremi, Tobias Hans
(86) Internationale Anmeldenummer: PCT/EP2009/052240
(87) Internationale Veröffentlichungsnummer: WO 2009/112369

(56) Entgegenhaltungen:
- EP-A- 1 568 487
- WO-A-00/59989
- WO-A-2007/093750
- US-B2- 7 098 293

## Beschreibung

Die vorliegende Erfindung betrifft ein Polyamid-Elastomer, daraus hergestellte Gegenstände sowie ein Verfahren zur Herstellung eines solchen Polyamid-Elastomers.

### STAND DER TECHNIK

Aus der EP 0 955 326 A1 sind Polyamide bekannt, die mit Dimerdiol und dimerdiolhaltigen hydroxylterminierten Polyestern modifiziert sind. Im Vergleich zu den unmodifizierten Polyamiden weisen die darin beschriebenen modifizierten Polyamide eine erhöhte Flexibilität und Zähigkeit auch bei tiefen Temperaturen auf. Als Polyamid-Blöcke werden eine Vielzahl von sehr allgemein formulierten Systemen offenbart, in den spezifischen Beispielen werden aber nur Systeme aus Aminolaurinsäure, gegebenenfalls in Kombination mit Laurinlactam sowie in Kombination mit Dodecandicarbonsäure, oder Terephthalsäure in Kombination mit Dodecandicarbonsäure angegeben oder Systeme allein auf Basis von Caprolactam oder auf Basis von Sebacinsäure in Kombination mit Adipinsäure-Hexamethylendiamin-Salz. Die EP 0 955 326 A1 beschreibt weiterhin eine entsprechende Formmasse und deren Verwendung.

Aus der EP 1 847 569 A1 sind ebenfalls Polyesteramide bekannt, welche in einem Blend mit einem Polyamid oder Copolyamid vorliegen, und welche insbesondere als hochwertige transparente Polyamidformmassen Anwendung finden sollen. Auch hier werden als Polyamid-Blöcke eine Vielzahl von sehr allgemein formulierten Systemen offenbart, in den spezifischen Beispielen werden aber nur Polyamid-12 Polyesteramide angegeben.

Weitere Polyesteramide sind aus der US 7098293 bekannt, hier im Zusammenhang mit der Verwendung als Heissklebstoffe. Es werden dabei als Polyamid-Blöcke für die Polyesteramide Homopolyamide auf Basis einer Disäure und einem Diamin vorgeschlagen (so genannte Homopolykondensate), wobei aber ausdrücklich darauf hingewiesen wird, dass die Kettenlänge der Bausteine sieben C-Atome nicht überschreitet.

Des weiteren ist aus der WO 00/59989 bekannt, dass es möglich ist, polymere Materialien zur Verfügung zu stellen, unter anderem Polyesteramid, welche aus nachwachsenden Rohstoffen aufgebaut sind.

### DARSTELLUNG DER ERFINDUNG

Der Erfindung liegt demnach unter anderem die Aufgabe zugrunde, ein im Vergleich zum Stand der Technik verbessertes Polyamid-Elastomer (Formmasse) zur Verfügung zu stellen. Bevorzugt soll dabei eine höhere Transparenz ermöglicht werden, eine verbesserte Entformbarkeit, und es soll möglich sein, den Werkstoff auf Rohstoffen aus nachwachsenden Quellen basieren zu lassen. Besonders bevorzugt besteht die erfindungsgemässe Formmasse aus mindestens 50 Gew.-% Bioanteil nach ASTM D6866-06a (Bioanteil: dort als biobased content bezeichnet, vgl. z.B. Kap. 3.3.9, Mass für den Anteil an nicht-fossilem, d.h. nachwachsendem Kohlenstoff, vgl. auch Kap. 17). Der Bioanteil wird dabei aus dem Verhältnis der Kohlenstoffisotope C12 und C14 abgeleitet. Da sich dieses Verhältnis bei fossilen und nachwachsenden Rohstoffen deutlich unterscheidet, kann der Bioanteil am erfindungsgemässen Polyamid-Elastomer messtechnisch einfach als eindeutig produktcharakterisierende Eigenschaft (wie ein Schmelzpunkt oder eine Molmasse) nachgewiesen werden.

Unter einer hohen Transparenz ist dabei zu verstehen, dass das Polyamid-Elastomer als transparentes Polyesteramid respektive transparente Formmasse ausgebildet ist, dessen Lichttransmission wenigstens 87% beträgt, wenn das Polyesteramid respektive die Formmasse in Form eines dünnen Plättchens von 2mm Dicke vorliegt. Die Messung der Lichttransmission wird dabei mit einem Haze Gard Plus der Firma BYK-Gardner an Platten der Dimension 2 x 60 x 60 mm gemäss ASTM D 1003 durchgeführt. Die Platten werden z.B. dafür auf einer Arburg 420C Allrounder 1000-250 Spritzgussmaschine im polierten Werkzeug hergestellt, wobei die Zylindertemperatur zwischen 200 und 300 °C und die Werkzeugtemperatur zwischen 10 und 80 °C liegt.

Die Lösung dieser Aufgabe wird unter anderem dadurch erreicht, dass ein Polyamid-Elastomer enthaltend wenigstens einen Anteil aus (einschliesslich aber auch als ganzes bestehend aus diesem Anteil) vorgelegt wird:
(a) 35 - 95 Gew.-% Hartsegmenteinheiten, aufgebaut aus
   (a1) Aminoundecansäure und/oder
   (a2) Azelainsäure und/oder Sebacinsäure und/oder
   (a3) Nonandiamin und/oder Decandiamin und/oder
   (a4) Caprolactam und/oder Aminocapronsäure und/oder Laurinlactam und/oder Aminolaurinsäure und/oder
   (a5) aliphatische C6 - C8- und/oder C11-C18-Disäure und/oder Terephthalsäure und/oder Isophthalsäure und/oder
   (a6) aliphatisches C4 - C8- und/oder C11-C18-Diamin und/oder m-Xylylendiamin (MXD)
(b) 5 - 65 Gew.-% Weichsegmenteinheiten, aufgebaut aus jeweils wenigstens einem
   (b1) C36-Dimerdiol und/oder
   (b2) Polyesterdiol auf Basis von C36-Dimerfettsäure und/oder von C36-Dimerdiol
   (b3) Polyetherdiol auf Basis von Ethylenoxid und/oder Propylenoxid und/oder Tetrahydrofuran und/oder
   (b4) Polyetherdiamin auf Basis von Ethylenoxid und/oder Propylenoxid und/oder Tetrahydrofuran
wobei der Bioanteil nach ASTM D6866-06a wenigstens dieses Anteils des Polyamid-Elastomers mindestens 50 Gew.-% ausmacht, wobei die Summe der Komponenten (a1) bis (a6) und (b1) bis (b4) zusammen 100 Gew.-% ergibt, und die Summe der Komponenten (a1) bis (a3), (b1) und (b2) grösser als 70 Gew.-% ist und wobei das Verhältnis der Summe von (b1) und (b2) zur Summe gebildet aus (b1) bis (b4) grösser oder gleich 0.2 ist, wobei die relative Lösungsviskosität in m-Kresol, 0.5 Gew.-%, bei 20°C im Bereich von 1.5-2.2 liegt, und wobei das Polyamid-Elastomer als transparentes Polyesteramid ausgebildet ist und eine Lichttransmission von wenigstens 87% aufweist, wenn das Polyesteramid in Form eines dünnen Plättchens von 2mm Dicke vorliegt. Bevorzugtermassen verfügt das gesamte Polyamid-Elastomer einschliesslich gegebenenfalls vorhandener weiterer Komponenten über einen derartigen Bioanteil.

Darunter ist zu verstehen, dass das Polyamid-Elastomer aus dem genannten Anteil und einer oder mehreren weiteren Komponenten im Sinne eines Blends vorliegen kann. Ebenfalls ist darunter zu verstehen, dass der genannte Anteil innerhalb des Polyamid-Elastomers noch weitere Bestandteile neben den Komponenten (a) sowie (b) in eingebundener Form aufweisen kann, so beispielsweise weitere Monomere, welche beispielsweise im Sinne eines Copolyamids im Anteil eingebunden sind.

Bevorzugt ist insbesondere, dass das Polyamid-Elastomer ohne weitere Komponenten vorliegt, das heisst nur aus dem genannten Anteil besteht (das heisst aus diesem so definierten Anteil gebildet wird, wobei aber die üblichen Additive, wie sie weiter hinten definiert werden, selbstverständlich, wie dem Fachmann bekannt, wenigstens in geringen Anteilen hinzukommen), und wenn der genannte Anteil ausschliesslich aus den Bestandteilen (a1) - (a6) sowie (b1) (b4) gebildet wird.

Die Summe der Komponenten (a1) bis (a6) und (b1) bis (b4) ergibt zusammen 100 Gew.-% und die Summe der Komponenten (a1) bis (a3), (b1) und (b2) ist grösser als 70 Gew.-% ist.

Anwender, die sich z.B. nach der Normengruppe ISO 14000 zertifizieren lassen wollen, verpflichten sich zum nachhaltigen Wirtschaften. Sie erstellen beispielsweise Lebenszyklusanalysen (Life cycle assessment, LCA) über die CO₂-Bilanz von Produkten. Massgebend für die CO₂-Bilanz ist dabei die Massenbilanz aus CO₂-Freisetzung (Quelle) und Immobilisierung in Pflanzen und Boden (Senke). Besonders nachteilig ist die Freisetzung fossilen Kohlendioxids, das über lange Zeit immobilisiert war, während biogene Quellen entsprechend ihres jungen Alters weitgehend CO₂-neutral erscheinen. Der Fachmann steht somit vor dem Problem, ökologisch vorteilhafte Werkstoffe einsetzen zu müssen, die bisher mit nachteiligen Werkstoffeigenschaften verbunden waren. Die Erfindung stellt insofern eine Lehre zur Überwindung dieses Problems dar, da sie also überraschenderweise ein unerwartet hochwertiges Polyamid-Elastomer als Werkstoff zur Verfügung stellt, welches dennoch ökologisch im wesentlichen vollständig unbedenklich weil aus nachwachsenden Rohstoffen aufgebaut ist.

Bevorzugtermassen ist die Summe der Komponenten (a1) bis (a3), (b1) und (b2) grösser als 80 Gew.-%. Insbesondere wird bevorzugt, wenn die Summe der Komponenten (a1) bis (a3) und (b1) und (b2) im Wesentlichen 100 Gew.-% ist, das heisst wenn die Anteile der Komponenten (a4)-(a6) sowie (b3) und (b4) gleich null sind. Weiterhin ist bevorzugt in diesem Zusammenhang, wenn auch der Anteil an (b2) gleich null ist.

Weiterhin wird bevorzugt, wenn die Summe der Komponenten (a2), (a3) und (b1) im wesentlichen 100 Gew.-% ist.

Eine weitere bevorzugte Ausführungsform ist dadurch gekennzeichnet, dass die Summe der Komponenten (a2), (a3), (b1) und (b2) im Wesentlichen 100 Gew.-% ist, und dass (a2) Sebacinsäure ist und (a3) als Decandiamin.

Eine weitere bevorzugte Ausführungsform ist dadurch gekennzeichnet, dass die Summe der Komponenten (a2), (a3) und (b1) im wesentlichen 100 Gew.-% ist, und dass (a2) als Sebacinsäure ausgewählt ist und (a3) als Decandiamin.

Weiterhin ist bevorzugt, wenn das Verhältnis der Summe von (a2) und (a3) zur Summe gebildet aus (a1) bis (a6) grösser oder gleich 0.6, grösser oder gleich 0.8, insbesondere bevorzugt grösser oder gleich 0.9 oder gleich 1.0 ist. Konkret bedeutet dies, dass bei einer Gesamtsumme der Teile (a) und (b) von 100 Gew.-%, die Summe von (a2) und (a3) im Konzentrationsbereich von 21 bis 57 Gew.-% oder im Bereich von 28 bis 76 Gew.-% liegt, bevorzugt im Bereich von 32 bis 86 Gew.-%, insbesondere bevorzugt im Bereich von 35 bis 95 Gew.-%.

Weiterhin ist bevorzugt, wenn das Verhältnis der Summe von (b1) und (b2) zur Summe gebildet aus (b1) bis (b4) grösser oder gleich 0.1, oder grösser oder gleich 0.2, insbesondere bevorzugt grösser oder gleich 0.5 ist. Konkret bedeutet dies, dass bei einer Gesamtsumme der Teile (a) und (b) von 100 Gew.-%, die Summe von (b1) und (b2) wenigstens 1 Gew.-% ausmacht, bevorzugt wenigstens 5 Gew.-%, insbesondere bevorzugt wenigstens 10 Gew.-% ausmacht. Somit liegt die Summe von (b1) und (b2) in einem Konzentrationsbereich von 1 - 65 Gew.-%, bevorzugt von 5 - 65 Gew.-% oder 5 - 60 Gew.-%, und insbesondere von 10 - 65 Gew.-% oder 10 - 50 Gew.-%, oder 10 - 40 Gew.-%. In diesem Zusammenhang ist es besonders bevorzugt, wenn die Konzentration von (b1) 10 - 65 Gew.-%.beträgt.

Bevorzugtermassen besteht die Polyamid-Elastomer-Formmasse im wesentlichen ausschliesslich aus den Komponenten (a) und (b) und die Hartsegmenteinheiten (a) machen 45-90 Gew.-%, insbesondere bevorzugt 55-85 Gew.-% aus.

Besonders gute Eigenschaften werden erreicht, wenn die Hartsegmenteinheiten teilkristallin sind und Schmelzpunkte oberhalb von 130°C aufweisen, bevorzugt im Bereich von 140-240°C, insbesondere bevorzugt im Bereich von 145-200°C. Dabei liegt die Kristallisationstemperatur der erfindungsgemässen Polyamid-Elastomere höchstens 50°C, bevorzugt höchstens 45°C und insbesondere weniger als 40°C unterhalb der Schmelztemperatur. Die Hartsegmenteinheiten sind bevorzugtermassen bifunktionell und weisen COOH-Endgruppen auf. Dabei liegt bevorzugt eine Endgruppenkonzentration im Bereich von 200-4000 mmol/kg, insbesondere bevorzugt im Bereich von 400-3000 mmol/kg vor.

Eine weitere bevorzugte Ausführungsform ist dadurch gekennzeichnet, dass für die Regelung der Molmasse der Hartsegmenteinheiten ausschliesslich Disäuren der Gruppe (a2) verwendet sind, bevorzugt ausgewählt aus Sebacinsäure und/oder C36-Dimerfettsäure, insbesondere ausgewählt ausschliesslich als Sebacinsäure.

Die relative Lösungsviskosität (ηᵣₑₗ) in m-Kresol, 0.5 Gew.-%, bei 20°C liegt im Bereich von 1.5-2.2.

Die erfindungsgemässen Polyamid-Elastomere weisen bevorzugtermassen einen Zug-E-Modul von höchstens 1200 MPa, bevorzugt von höchstens 1000 MPa und besonders bevorzugt von höchstens 700 MPa auf. Damit besitzen die Polyamid-Elastomere bevorzugt Steifigkeiten im Zug-E-Modul-Bereich von 50 bis 1000 MPa und besonders bevorzugt im Bereich von 80 bis 700 MPa.

Bevorzugtermassen ist das Polyamid-Elastomer im Wesentlichen oder vollständig frei von MACM oder anderen cycloaliphatischen Diaminen.

Das Polyamid-Elastomer kann und wird normalerweise aber die üblichen Additive in den üblicherweise geringen Anteilen (weniger als 10 Gew.-%, bevorzugtermassen weniger als 5 Gew.-%, insbesondere bevorzugt weniger als 3 Gew.-%) aufweisen.

Wenn mit anderen Worten davon gesprochen wird, dass der Anteil aus (a) und (b) 100 Gew.-% ausmachen, so ist normalerweise davon auszugehen, dass, wenn das Polyamid-Elastomere neben dem Anteil keine weiteren Bestandteile aufweist, Additive in geringem Umfang ebenfalls im Anteil vorliegen können, bevorzugtermassen in den oben angegebenen Mengenbereichen, normalerweise bezogen auf das Gesamtgewicht aus Anteil und Additiven. Bei den genannten Additiven kann es sich um Stabilisatoren wie UV-Stabilisatoren, Hitzestabilisatoren, Radikalfänger und/oder um Verarbeitungshilfsstoffe, Weichmacher, weitere Polymere und/oder um funktionelle Additive bevorzugt zur Beeinflussung optischer Eigenschaften wie insbesondere des Brechungsindexes oder um Kombinationen oder Mischungen davon handeln. Des Weiteren können die Formmassen nanoskalige Füll- und/oder Funktionsstoffe, wie zum Beispiel Schichtmineralien oder Metalloxide, die den Brechungsindex erhöhen, oder photochrome Farbstoffe beinhalten.

Im Sinne der Erfindung können die Formmassen ausserdem dem Fachmann geläufige Füll- und/oder Zuschlagstoffe, beispielsweise runde Glasfasern (kreisförmige Querschnittsfläche) oder flache Glasfasern (nicht-kreisförmige Querschnittsfläche), Glaskugeln, Carbonfasern, Russ, Graphit, Flammschutzmittel, Mineral wie zum Beispiel Calciumcarbonat oder Bariumsulfat, oder andere Polymere, bevorzugt Polyamide, insbesondere aliphatische Polyamide auf Basis nachwachsender Rohstoffe, oder beispielsweise Schlagzähmodifikatoren wie funktionalisierte Polyolefine enthalten. Diese Zuschlagstoffe können auch im Vergleich zum Anteil aus (a) und (b) in vergleichsweise großen Mengen vorliegen, so beispielsweise kann das Verhältnis von Zuschlagstoff zu Anteil gebildet aus (a) und (b) im Bereich von 0.03 - 2.0, bevorzugt im Bereich von 0.1 - 1.0 liegen.

Die erfindungsgemässe Formmasse kann selbstverständlich auch als Blendkomponente eingesetzt werden, beispielsweise zum Blenden mit anderen Polyamiden. In einer bevorzugten Ausführung basiert dieses Polyamid ebenfalls auf Rohstoffen nachwachsender Quellen. Bevorzugt werden die Hartsegmenteinheiten (a) ausschliesslich auf Basis von PA1010, gegebenenfalls geregelt durch Sebacinsäure, gebildet und die Weichsegmenteinheiten ausschliesslich aus C36-Dimerdiol.

Bevorzugtermassen beruht das Polyamid-Elastomer zu mehr als 50%, bevorzugt im Wesentlichen vollständig auf nachwachsenden Rohstoffen. Dies wird erreicht, indem hauptsächlich oder sogar ausschliesslich Monomere, wie z.B. Azelainsäure, Sebacinsäure, C36-Dimerfettsäure, Aminoundecansäure, Nonandiamin, Decandiamin und C36-Dimerdiol, zum Einsatz kommen, die aus diversen Pflanzenölen gewonnen werden.

Ein für die Monomerherstellung wichtiges Pflanzenöl ist das Rizinusöl, das aus dem Samen des afrikanischen Wunderbaumes (Rizinus Communis) gewonnen wird. Das Rizinusöl besteht zu 80 - 90% aus dem Triglyzerid der Rizinolsäure sowie aus weiteren Glyceriden verschiedener C18-Fettsäuren. Seit Jahrtausenden wird Rizinusöl bereits als Heilmittel verwendet, es findet aber auch seit langem bei technischen Ölen, Kosmetika, Beschichtungen und Hydraulikölen Einsatz. Die Sebacinsäure wird durch alkalische Spaltung von Rizinusöl bei hohen Temperaturen und nachfolgender Behandlung mit Salzsäure erhalten. Aus dem Methylester der Rizinussäure wird durch pyrolytische Zersetzung Heptaldehyd und Methyl-10-undecensäureester gewonnen, wobei letzterer über mehrere Reaktionsstufen in die 11-Aminoundecansäure überführt wird.

Azelainsäure und Brassilsäure basieren ebenfalls auf natürlichen Rohstoffen, sie werden durch Ozonolyse der Öl- bzw. Erucasäure hergestellt. Die Erucasäure wird aus dem Samen von Raps, Senf, Goldlack oder Kresse gewonnen.

Die C36-Dimersäuren und die C36-Dimerdiole werden durch thermische Dimerisierung von ungesättigten C18-Carbonsäuren oder deren Ester hergestellt. Ausgangsstoffe sind z.B. Tallölfettsäuren sowie die Öl - oder Linolensäure.

Nonandiamin, Decandiamin und Tridecandiamin beruhen ebenfalls auf natürlichen Rohstoffen, da sie aus den entsprechenden Dicarbonsäuren über die Dinitrilroute hergestellt werden.

Weitere Rohstoffe, beispielsweise gewonnen durch mikrobiologische Fermentation befinden sich im industriellen Aufbau, und können ebenfalls eingesetzt werden.

Das Polyamid-Elastomer ist also bevorzugtermassen dadurch gekennzeichnet, dass es einen Bioanteil nach ASTM D6866-06a von mindestens 70 Gew.-% oder von mindestens 75 Gew.-% aufweist. Besonders bevorzugt ist ein Bioanteil von mindestens 80 Gew.-% oder von mindestens 85 Gew.-%, insbesondere von wenigstens 95 Gew.-%. Möglich ist sogar ein Anteil im Bereich von 98 - 100 Gew.-%.

Des Weiteren betrifft die vorliegende Anmeldung ein Granulat oder einen Gegenstand mit wenigstens einem Bereich oder einer Schicht aus einem Polyamid-Elastomer, wie es oben beschrieben worden ist, oder mit/aus einem Blend mit einem solchen Polyamid-Elastomer. Der Gegenstand kann dabei beispielsweise in Form eines Bestandteils wie Abdeckung, Dichtung, Verkleidung, Halterung, und/oder Gehäuse eines elektrischen und/oder elektronischen Gerätes, insbesondere eines Mobiltelefons, ausgebildet sein.

Weitere Anwendungen bestehen in Bauteilen und/oder Bestandteilen mit spezieller Haptik (soft-touch-Oberffächen) sowie für weiche bzw. elastische Bauteile und/oder Bestandteile, insbesondere für Sportartikel und/oder Sportschuhe. Insbesondere kann dazu die erfindungsgemässe Formmasse im 2-Komponentenspritzguss verwendet werden, beispielsweise in Kombination mit Polyamid-Formmassen und/oder Elastomeren.

Zudem betrifft die vorliegende Erfindung ein Verfahren zur Herstellung eines Polyamid-Elastomers, wie es oben beschrieben worden ist. Das Verfahren ist bevorzugtermassen gemäss einer ersten Ausführungsform (Verfahren A) dadurch gekennzeichnet, dass Aminocarbonsäure und/oder Lactam und/oder Diamin und Dicarbonsäure, oder ein Salz aus Diamin und Dicarbonsäure, und Dimerdiol und/oder Polyesterdiol und/oder Polyetherdiol, gegebenenfalls mit einem phosphorhaltigen Katalysator vorgelegt werden, gegebenenfalls mit Stickstoff inertisiert werden und unter Rühren auf die erforderliche Reaktionstemperatur erwärmt werden, wobei diese Temperatur bevorzugtermassen im Bereich von 220 - 280°C liegt, dann ein Veresterungskatalysator, bevorzugt unter Normaldruck oder vermindertem Druck über eine Schleuse, zugegeben wird, anschliessend der Druck reduziert wird, bevorzugt auf einen Druck im Bereich von 100 - 10000 Pa (1 - 100 mbar), und bevorzugt bei Temperaturen von 220-280°C solange polykondensiert wird, bis das gewünschte Drehmoment erreicht wird, und dann die Schmelze ausgetragen und granuliert wird.

Gemäss einer alternativen Ausführungsform (Verfahren B) ist das Verfahren dadurch gekennzeichnet, dass Aminocarbonsäure und/oder Lactam und/oder Diamin und Dicarbonsäure, oder ein Salz aus Diamin und Dicarbonsäure, vorgelegt werden, gegebenenfalls mit Stickstoff inertisiert werden und unter Rühren auf die erforderliche Reaktionstemperatur erwärmt, wobei diese Temperatur bevorzugtermassen im Bereich von 220 - 280°C liegt, und für 2 - 4 h bei dieser Temperatur unter Ausbildung eines carboxylterminierten Polyamid-Präpolymerisates, gegebenenfalls mit Hilfe eines phosphorhaltigen Katalysators polykondensiert wird, dann eine Mischung aus Dimerdiol und/oder Polyesterdiol und/oder Polyetherdiol und/oder Polyetherdiamin und gegebenenfalls eines Veresterungskatalysators bevorzugt unter Normaldruck oder vermindertem Druck über eine Schleuse hinzugeben wird, anschliessend der Druck reduziert wird, bevorzugt auf einen Druck im Bereich von 100 - 10000 Pa (1 - 100 mbar) und bevorzugt bei Temperaturen von 220 - 280°C solange polykondensiert wird, bis das gewünschte Drehmoment erreicht wird, und dann die Schmelze ausgetragen und granuliert wird. Enthält die erfindungsgemässe Formmasse C36-Dimerfettsäure, dann wird sie bevorzugt mit Hilfe des Verfahrens B hergestellt.

Weitere bevorzugte Ausführungsformen der Erfindung sind in den abhängigen Ansprüchen beschrieben.

### WEGE ZUR AUSFÜHRUNG DER ERFINDUNG

Das erfindungsgemässe Polyamid-Elastomer soll in der Folge unter Zuhilfenahme von Beispielen vorgestellt und im Vergleich mit Vergleichsbeispielen gezeigt werden, dass die vorteilhaften Eigenschaften mit den Formmassen nach dem Stand der Technik tatsächlich erreicht werden können. Die Beispiele sollen dabei zur Stützung der Erfindung hinzugezogen werden, nicht aber zur Einschränkung der Erfindung, wie sie in den Ansprüchen definiert ist.

Beispiele (B) 1 und 2 sowie Vergleichsbeispiele (VB) 1 bis 3:

Die Polyamid-Elastomere B1 und B2 sowie VB1 bis VB3 wurden mittels eines Polykondensationprozesses hergestellt. Die entsprechenden Zusammensetzungen und am polymerisierten Material gemessenen Eigenschaften sind in der Tabelle zusammengefasst:

| | Einheit | B1 | B2 | VB1 | VB2 | VB3 |
|---|---|---|---|---|---|---|
| Bioanteil gemäss ASTM D6866-06a | % | 99 | 99 | 45 | 16 | 59 |
| Sebacinsäure | Gew.-% | 14.6 | 27.7 | | | |
| Decandiamin | Gew.-% | | 22.2 | | | |
| 1010-Salz | Gew.-% | 42.8 | 0 | | | |
| 66-Salz (AH-Salz) | Gew.-% | | | | | 49.9 |
| Versamine 551 | Gew.-% | | | | | 25.1 |
| Empol 1062 | Gew.-% | | 23.2 | | 14.0 | 25.0 |
| Pripol 2033 | Gew.-% | 42.5 | 26.8 | 42.4 | | |
| Terephthalsäure | Gew.-% | | | 12.7 | | |
| Laurinlactam | Gew.-% | | | 44.8 | 39.2 | |
| Elastamine RP-2009 | Gew.-% | | | | 46.8 | |
| Tyzor NPZ | Gew.-% | 0.1 | 0.1 | 0.1 | | |

| **Eigenschaften** | | | | | | |
|---|---|---|---|---|---|---|
| Lösungsviskosität | | 1.65 | 1.62 | 1.58 | 1.80 | 1.28 |
| Schmelzpunkt | °C | 180 | 173 | 134 | 160 | 257 |
| Kristallisationstemperatur | °C | 144 | 140 | 70 | 121 | 227 |
| Differenz zwischen Schmelz- und Kristallisationstemperatur | °C | 36 | 33 | 64 | 41 | 30 |
| Zug-E-Modul | MPa | 125 | 180 | 80 | 90 | 2800 |
| Reissfestigkeit | MPa | 27 | 30 | 22 | 22 | 60 |
| Reissdehnung | % | 540 | 480 | 430 | 460 | 3 |
| Kerbschlagzähigkeit Charpy 23°C | kJ/m² | o.B. | o.B. | o.B. | o.B. | 5 |
| Transparenz | % | 88 | 90 | 88 | 85 | < 50 |
| Entformung bei der Spritzgussverarbeitung | siehe Erläuterung | + | + | o | - | o |

| | | | | | | |
|---|---|---|---|---|---|---|
| Erläuterung: +: vollautomatischer Spritzgussbetrieb ohne Verwendung eines Formtrennmittels möglich; o: vollautomatischer Spritzgussbetrieb unter Verwendung eines Formtrennmittels möglich; -: manuelle Entformung erforderlich | | | | | | |

Dabei werden folgende Materialien eingesetzt:
Pripol 2033 ist ein C36-Diol (CAS-Nr. 147853-32-5), erhältlich von Uniqema;
Versamine 551 ist ein Dimerdiamin, erhältlich von Cognis
AH-Salz (Monomer von PA 66) = Salz aus Adipinsäure und Hexamethylendiamin.
Empol 1062 ist eine partiell hydrierte C36-Dimersäure (CAS-Nr. 61788-89-4), erhältlich von Cognis;
Tyzor NPZ -Tetra-(n-propyl)-zirkonat, erhältlich von Dupont;
Elastamine RP-2009 ist ein Polyetherdiamin mit einem Molekulargewicht von circa 2000 g/mol und ist erhältlich von Huntsman.

Die Ausgangsmaterialien wurden unter Vorlegung der oben angegebenen Materialien in einem Rührkessel wie folgt hergestellt:

In dem Beispiel B1 werden die polyamidbildenden Monomere (1010-Salz, d.h. Salz aus Sebacinsäure und Decandiamin, Sebacinsäure, C36-Dimerfettsäure) sowie Dimerdiol und Antischaum in den Reaktor vorgelegt und mit Stickstoff inertisiert. Der Reaktor wird anschliessend auf 270°C aufgeheizt und die Reaktionsmischung für 4 Stunden unter Stickstoffbeschleierung (Baroentgasung) bei einer Produkttemperatur von 260°C gerührt. Anschliessend wird der Mischung der Veresterungskatalysator hinzugesetzt.

In den Beispielen B2, VB1, VB2 wird in einer ersten Stufe zunächst das Polyamid-Hartsegment polykondensiert. Dazu werden die polyamidbildenden Monomere (1010-Salz, d.h. Salz aus Sebacinsäure und Decandiamin, Sebacinsäure, C36-Dimerfettsäure) und Antischaum in den Reaktor vorgelegt und mit Stickstoff inertisiert. Der Reaktor wird anschliessend auf 270°C aufgeheizt und die Reaktionsmischung für 4 Stunden unter Stickstoffbeschleierung (Baroentgasung) bei einer Produkttemperatur von 260°C gerührt. In einer zweiten Stufe werden in B2 und VB1 die carboxylterminierten Polyamid-Hartsegmente mit Diolen und/oder hydroxylterminierten Polyestern umgesetzt. Hierzu wird eine Mischung bestehend aus Diol, Polyester und Veresterungskatalysator zur Schmelze der Polyamid-Hartsegmente (Produkttemperatur: 230 - 260°C) hinzugesetzt.

Beim Vergleichsbeispiel VB2 wird in einer zweiten Stufe das carboxylterminierte Polyamid-Hartsegment mit dem Polyetherdiamin umgesetzt. Hierzu wird das auf 150°C vorgewärmte Polyetherdiamin, gegebenenfalls zusammen mit Stabilisatoren und Kondensationsbeschleunigem, zur Schmelze der Polyamid-Hartsegmente, die eine Produkttemperatur von 230 bis 260°C aufweist, hinzugesetzt,

Dann wird der Druck im Reaktor innerhalb von 60 Minuten auf 200 mbar reduziert. Nachdem die Reaktionsmischung 30 Minuten bei diesem Druck gerührt wurde, wird der Druck innerhalb von 60 Minuten bis zu einem Enddruck von kleiner 20 mbar gesenkt. Sobald das gewünschte Drehmoment erreicht wird, wird das Vakuum gebrochen, die Polymerschmelze mit Stickstoff von 5 bar beaufschlagt und durch Düsen in ein Wasserbad ausgetragen. Die abgezogenen Stränge werden granuliert und das Granulat 24h bei 80°C getrocknet,

Anschliessend wurden diese Mischungen auf einer Arburg 420C Allrounder 1000-250 Spritzgussmaschine zu verschiedenen Probekörpern verarbeitet, wobei die Zylindertemperaturen zwischen 180-260°C und die Formtemperatur zwischen 10 und 60 °C lagen. Die Schneckendrehzahl betrug 150-400 Upm.

Die relative Viskosität (ηᵣₑₗ) wurde bestimmt nach DIN EN ISO 307, in 0.5 Gew.-%iger m-Kresollösung bei einer Temperatur von 20°C.

Die Glasumwandlungstemperatur (Tg), der Schmelzpunkt (Tₘ), die Kristallisationstemperatur und die Schmelzwärme (Hₘ) wurden bestimmt nach ISO 11357-1/2.

Die Differential scanning calorimetry (DSC) wurde mit einer Aufheizrate von 20K/min durchgeführt.

Zug-E-Modul, Reissfestigkeit und Reissdehnung wurden nach ISO 527 mit einer Zuggeschwindigkeit von 1 mm/min (Zug-E-Modul) bzw. 50 mm/min (Reissfestigkeit, Reissdehnung) am ISO-Zugstab , Norm: ISO/CD 3167, Typ Al, 170 x 20/10 x 4 mm bei Temperatur 23 °C bestimmt

Kerbschlagzähigkeit nach Charpy wurden nach ISO 179/keU am ISO-Prüfstab, Norm: ISO/CD 3167, Typ B1, 80 x 10 x 4 mm bei Temperatur 23 °C gemessen.

Lichttransmission (Transparenz) wurde nach ASTM D 1003 an Platten der Dimension 2 x 60 x 60 mm bei einer Temperatur von 23°C mit dem Messgerät Haze Gard Plus der Firma Byk Gardner mit der CIE Lichtart C bestimmt. Der Lichttransmissionswerte werden in % der eingestrahlten Lichtmenge angegeben.

Obwohl in VB3 ein Bioanteil von über 50% erreicht wird, zeigt dieses Vergleichsbeispiel, dass die Herstellung solcher Formmassen schwierig sein kann und dass hinsichtlich der Eigenschaften, die in der Aufgabe gesetzten Ziele nicht erreicht wurden. Der Polymerisationsansatz VB3 erreichte zum einen nur eine ungenügende Viskosität, die relative Lösungsviskosität liegt bei 1.28, und zum anderen weist das resultierende Produkt, möglicherweise aufgrund von Unverträglichkeiten zwischen den Komponenten, keine elastomeren Eigenschaften auf, da der Zug-E-Modul bei 2800 MPa liegt.

In B1 und B2 wurden die nach dem Stand der Technik bekannten PA12-Elastomere (VB1 und VB2) mit derzeit verfügbaren Monomeren auf Basis nachwachsender Rohstoffe hinsichtlich der Eigenschaften möglichst gut nachgestellt. Die erfindungsgemässen Polyamid-Elastomere weisen trotz moderater Schmelztemperaturen relativ hohe Kristallisationstemperaturen auf und lassen sich im Spritzguss problemlos verarbeiten (vollautomatische Entformung ohne Einsatz von Formtrennmitteln). Des weiteren zeichnen sich die Produkte aus den Beispielen B1 und B2 durch gute mechanische Eigenschaften und eine hohe Transparenz (Lichttransmission) im UV/VIS-Spektrum aus.

## Patentansprüche

1. Polyamid-Elastomer enthaltend wenigstens einen Anteil aus
(a) 35 - 95 Gew.-% Hartsegmenteinheiten, aufgebaut aus
(a1) Aminoundecansäure und/oder
(a2) Azelainsäure und/oder Sebacinsäure und/oder
(a3) Nonandiamin und/oder Decandiamin und/oder
(a4) Caprolactam und/oder Aminocapronsäure und/oder Laurinlactam und/oder Aminolaurinsäure und/oder
(a5) aliphatische C6 - C8- und/oder C11-C18-Disäure und/oder Terephthalsäure und/oder Isophthalsäure und/oder
(a6) aliphatisches C4 - C8- und/oder C11-C18-Diamin und/oder m-Xylylendiamin (MXD)
(b) 5 - 65 Gew.-% Weichsegmenteinheiten, aufgebaut aus
(b1) C36-Dimerdiol und/oder
(b2) Polyesterdiole auf Basis von C36-Dimerfettsäure und/oder von C36-Dimerdiol
(b3) Polyetherdiol auf Basis von Ethylenoxid und/oder Propylenoxid und/oder Tetrahydrofuran und/oder
(b4) Polyetherdiamin auf Basis von Ethylenoxid und/oder Propylenoxid und/oder Tetrahydrofuran
wobei der Bioanteil nach ASTM D6866-06a wenigstens dieses Anteils mindestens 50 Gew.-% ausmacht, wobei die Summe der Komponenten (a1) bis (a6) und (b1) bis (b4) zusammen 100 Gew.-% ergibt, und die Summe der Komponenten (a1) bis (a3), (b1) und (b2) grösser als 70 Gew.-% ist und wobei das Verhältnis der Summe von (b1) und (b2) zur Summe gebildet aus (b1) bis (b4) grösser oder gleich 0.2 ist, wobei die relative Lösungsviskosität in m-Kresol, 0.5 Gew.-%, bei 20°C im Bereich von 1.5-2.2 liegt, und wobei das Polyamid-Elastomer als transparentes Polyesteramid ausgebildet ist und eine Lichttransmission von wenigstens 87% aufweist, wenn das Polyesteramid in Form eines dünnen Plättchens von 2mm Dicke vorliegt.

2. Polyamid-Elastomer nach Anspruch 1, **dadurch gekennzeichnet, dass** das Polyamid-Elastomer aus dem genannten Anteil besteht und die Summe der Komponenten (a1) bis (a6) und (b1) bis (b4) zusammen 100 Gew.-% ergibt, und dass die Summe der Komponenten (a1) bis (a3), (b1) und (b2) grösser als 50 Gew.-% ist, oder dass die Summe der Komponenten (a1) bis (a3) und (b1) und (b2) grösser als 80 Gew.-% ist oder im wesentlichen 100 Gew.-% ist, oder dass die Summe der Komponenten (a2), (a3) und (b1) im wesentlichen 100 Gew.-% ist.

3. Polyamid-Elastomer nach einem der vorhergehenden Ansprüche 1 oder 2, **dadurch gekennzeichnet, dass** die Summe der Komponenten (a2), (a3) und (b1) im wesentlichen 100 Gew.-% ist, und dass (a2) als Sebacinsäure ausgewählt ist und (a3) als Decandiamin ausgewählt ist.

4. Polyamid-Elastomer nach einem der vorhergehenden Ansprüche, **dadurch gekennzeichnet, dass** die Summe der Komponenten (a1) bis (a6) und (b1) bis (b4) zusammen 100 Gew.-% ergibt, und die Summe von (b1) und (b2) 1 bis 65 Gew.-% ausmacht, bevorzugt 5 bis 65 Gew.-%, insbesondere bevorzugt 10 bis 65 Gew.-% ausmacht.

5. Polyamid-Elastomer nach einem der vorhergehenden Ansprüche, **dadurch gekennzeichnet, dass** es einen Bioanteil nach ASTM D6866-06a von mindestens 70 Gew.-% aufweist, bevorzugt von mindestens Gew.-85%, insbesondere bevorzugt von wenigstens Gew.-95%.

6. Polyamid-Elastomer nach einem der vorhergehenden Ansprüche, **dadurch gekennzeichnet, dass** es im wesentlichen ausschliesslich aus den Komponenten (a) und (b) besteht und dass die Hartsegmenteinheiten (a) 45-90 Gew.-% ausmachen, insbesondere bevorzugt 55-85 Gew.-%,.

7. Polyamid-Elastomer nach einem der vorhergehenden Ansprüche, **dadurch gekennzeichnet, dass** die Hartsegmenteinheiten teilkristallin sind und Schmelzpunkte oberhalb von 130°C aufweisen, bevorzugt im Bereich von 140-240°C, insbesondere bevorzugt im Bereich von 145-200°C, wobei bevorzugtermassen die Kristallisationstemperatur des Polyamid-Elastomeren höchstens 50°C, bevorzugt höchstens 45°C und insbesondere weniger als 40°C unterhalb der Schmelztemperatur liegt.

8. Polyamid-Elastomer nach einem der vorhergehenden Ansprüche, **dadurch gekennzeichnet, dass** die Hartsegmenteinheiten bifunktionell sind und COOH-Endgruppen aufweisen, wobei bevorzugt eine Endgruppenkonzentration im Bereich von 200-4000 mmol/kg, insbesondere bevorzugt im Bereich von 400-3000 mmol/kg vorliegt.

9. Polyamid-Elastomer nach einem der vorhergehenden Ansprüche, **dadurch gekennzeichnet, dass** für die Regelung der Molmasse der Hartsegmenteinheiten ausschliesslich Disäuren der Gruppe (a2) verwendet sind, bevorzugt ausgewählt ausschliesslich als Sebacinsäure .

10. Polyamid-Elastomer nach einem der vorhergehenden Ansprüche, **dadurch gekennzeichnet, dass** es frei von MACM oder anderen cycloaliphatischen Diaminen ist.

11. Polyamid-Elastomer nach einem der vorhergehenden Ansprüche, **dadurch gekennzeichnet, dass** die Hartsegmenteinheiten (a) ausschliesslich auf Basis von PA1010, gegebenenfalls geregelt durch Sebacinsäure und/oder C36-Dimerfettsäure, gebildet sind und die Weichsegmenteinheiten ausschliesslich aus C36-Dimerdiol gebildet sind.

12. Polyamid-Elastomer nach einem der vorhergehenden Ansprüche, **dadurch gekennzeichnet, dass** es neben dem genannten Anteil Additive, bevorzugt weniger als 10 Gew.-% bezogen auf das Gesamtgewicht aus Anteil und Additiven, insbesondere bevorzugtermassen weniger als 5 Gew.-%, aufweist, wobei bevorzugtermassen die Additive ausgewählt sind aus der Gruppe: Stabilisatoren, UV-Stabilisatoren, Hitzestabilisatoren, Schlagzähmodifikatoren, Radikalfänger, Verarbeitungshilfsstoffe, Weichmacher, weitere Polymere, funktionelle Additive bevorzugt zur Beeinflussung optischer Eigenschaften wie insbesondere des Brechungsindexes oder Kombinationen oder Mischungen davon.

13. Polyamid-Elastomer nach einem der vorhergehenden Ansprüche, **dadurch gekennzeichnet, dass** es neben dem genannten Anteil Füll- und/oder Zuschlags-und/oder Funktionsstoffe, wie insbesondere nanoskalige Füllstoffe, Schichtmineralien oder Metalloxide, photochrome Farbstoffe, runde oder flache Glasfasern, Glaskugeln, Carbonfasern, Russ, Graphit, Flammschutzmittel, Mineral wie insbesondere Calciumcarbonat oder Bariumsulfat, andere Polymere, bevorzugt Polyamide, insbesondere aliphatische Polyamide auf Basis nachwachsender Rohstoffe, Schlagzähmodifikatoren, wie insbesondere funktionalisierte Polyolefine beinhaltet.

14. Granulat oder Gegenstand mit wenigstens einem Bereich oder einer Schicht aus einem Polyamid-Elastomer nach einem der vorhergehenden Ansprüche oder mit einem Blend mit einem Polyamid-Elastomer nach einem der vorhergehenden Ansprüche, insbesondere bevorzugt als Bestandteil eines Sportartikels oder Sportschuhs oder als Bestandteil wie Abdeckung, Dichtung, Verkleidung, Halterung, und/oder Gehäuse eines elektrischen und/oder elektronischen Gerätes, insbesondere eines Mobiltelefons.

15. Verfahren zur Herstellung eines Polyamid-Elastomers nach einem der Ansprüche 1-18, **dadurch gekennzeichnet, dass**
entweder
Aminocarbonsäure (a1, a4) und/oder Lactam (a4) und/oder Diamin (a3, a6) und Dicarbonsäure (a2, a5), oder ein Salz aus Diamin (a3, a6, b4) und Dicarbonsäure (a2, a5), und Dimerdiol (b1) und/oder Polyesterdiol (b2) und/oder Polyetherdiol (b3) und/oder Polyetherdiamin (b4), gegebenenfalls mit einem Katalysator, bevorzugt einem phosphorhaltigen Katalysator, vorgelegt werden, gegebenenfalls mit Stickstoff inertisiert werden und unter Rühren auf die erforderliche Reaktionstemperatur erwärmt werden, wobei diese Temperatur bevorzugtermassen im Bereich von 220 - 280°C liegt, dann ein Veresterungskatalysator, bevorzugt unter Normaldruck oder vermindertem Druck über eine Schleuse, zugegeben wird, anschliessend der Druck reduziert wird, bevorzugt auf einen Druck im Bereich von 100 - 10000 Pa (1 - 100 mbar) und bevorzugt bei Temperaturen von 220 - 280°C solange polykondensiert wird, bis das gewünschte Drehmoment erreicht wird, und dann die Schmelze ausgetragen und granuliert wird (Verfahren A),
oder
Aminocarbonsäure (a1, a4) und/oder Lactam (a4) und/oder Diamin (a3, a6) und Dicarbonsäure (a2, a5), oder ein Salz aus Diamin (a3, a6, b4) und Dicarbonsäure (a2, a5), vorgelegt werden, gegebenenfalls mit Stickstoff inertisiert werden und unter Rühren auf die erforderliche Reaktionstemperatur erwärmt werden, wobei diese Temperatur bevorzugtermassen im Bereich von 220 - 280°C liegt, und für 2 - 4 h bei dieser Temperatur unter Ausbildung eines carboxylterminierten Polyamid-Präpolymerisates, gegebenenfalls mit Hilfe eines Katalysators, bevorzugt einems phosphorhaltigen Katalysators, polykondensiert wird, dann eine Mischung aus Dimerdiol (b1) und/oder Polyesterdiol (b2) und/oder Polyetherdiol (b3) und/oder Polyetherdiamin (b4) und gegebenenfalls eines Veresterungskatalysators bevorzugt unter Normaldruck oder vermindertem Druck über eine Schleuse hinzugeben wird, anschliessend der Druck reduziert wird, bevorzugt auf einen Druck im Bereich von 100 - 10000 Pa (1 - 100 mbar) und bevorzugt bei Temperaturen von 220 - 280°C solange polykondensiert wird, bis das gewünschte Drehmoment erreicht wird, und dann die Schmelze ausgetragen und granuliert wird (Verfahren B),
wobei in Gegenwart des Monomers C36-Dimerfettsäure (a2) bevorzugtermassen Verfahren B zum Einsatz kommt.

## Claims

1. Polyamide elastomer comprising at least some content of
(a) from 35 to 95% by weight of hard-segment units composed of
(a1) aminoundecanoic acid and/or
(a2) azelaic acid and/or sebacic acid and/or
(a3) nonanediamine and/or decanediamine and/or
(a4) caprolactam and/or aminocaproic acid and/or laurolactam and/or aminolauric acid and/or
(a5) aliphatic C6-C8- and/or C11-C18-diacid and/or terephthalic acid and/or isophthalic acid and/or
(a6) aliphatic C4-C8- and/or C11-C18-diamine and/or m-xylylenediamine (MXD)
(b) from 5 to 65% by weight of soft-segment units composed of
(b1) C36-dimerdiol and/or
(b2) polyesterdiols based on C36-dimer fatty acid and/or on C36-dimerdiol
(b3) polyetherdiol based on ethylene oxide and/or propylene oxide and/or tetrahydrofuran and/or
(b4) polyetherdiamine based on ethylene oxide and/or propylene oxide and/or tetrahydrofuran
where the bio content to ASTM D6866-06a at least of this content accounts for at least 50% by weight, where the entirety of components (a1) to (a6) and (b1) to (b4) gives a total of 100% by weight, and the entirety of components (a1) to (a3), (b1) and (b2) is greater than 70% by weight, and where the ratio of the entirety of (b1) and (b2) to the entirety of (b1) to (b4) is greater than or equal to 0.2, where the relative solution viscosity in m-cresol, 0.5% by weight, at 20°C is in the range from 1.5 to 2.2, and where the polyamide elastomer is transparent polyester amide and its light transmittance is at least 87%, when the polyester amide takes the form of a thin plaque of thickness 2 mm.

2. Polyamide elastomer according to Claim 1, **characterized in that** the polyamide elastomer consists of the specified content and the entirety of components (a1) to (a6) and (b1) to (b4) gives a total of 100% by weight, and that the entirety of components (a1) to (a3), (b1) and (b2) is greater than 50% by weight, or that the entirety of components (a1) to (a3) and (b1) and (b2) is greater than 80% by weight or is in essence 100% by weight, or that the entirety of components (a2), (a3) and (b1) is in essence 100% by weight.

3. Polyamide elastomer according to either of the preceding Claims 1 and 2, **characterized in that** the entirety of components (a2), (a3) and (b1) is in essence 100% by weight, and that (a2) has been selected to be sebacic acid and (a3) has been selected to be decanediamine.

4. Polyamide elastomer according to any of the preceding claims, **characterized in that** the entirety of components (a1) to (a6) and (b1) to (b4) gives a total of 100% by weight, and the entirety of (b1) and (b2) accounts for from 1 to 65% by weight, preferably from 5 to 65% by weight, with particular preference from 10 to 65% by weight.

5. Polyamide elastomer according to any of the preceding claims, **characterized in that** its bio content to ASTM D6866-06a is at least 70% by weight, preferably at least 85% by weight, with particular preference at least 95% by weight.

6. Polyamide elastomer according to any of the preceding claims, **characterized in that** it in essence consists exclusively of components (a) and (b), and that the hard-segment units (a) account for from 45-90% by weight, with particular preference from 55 to 85% by weight.

7. Polyamide elastomer according to any of the preceding claims, **characterized in that** the hard-segment units are semicrystalline and have melting points above 130°C, preferably in the range from 140 to 240°C, with particular preference in the range from 145 to 200°C, where the crystallization temperature of the polyamide elastomer is preferably at most 50°C, with preference at most 45°C and in particular less than 40°C below the melting point.

8. Polyamide elastomer according to any of the preceding claims, **characterized in that** the hard-segment units are bifunctional and have terminal COOH groups, where there is preferably a terminal group concentration in the range from 200 to 4000 mmol/kg, with particular preference in the range from 400 to 3000 mmol/kg.

9. Polyamide elastomer according to any of the preceding claims, **characterized in that** regulation of the molar mass of the hard-segment units is achieved exclusively by using diacids of the group (a2), preferably exclusively selected to be sebacic acid.

10. Polyamide elastomer according to any of the preceding claims, **characterized in that** it is free from MACM and from other cycloaliphatic diamines.

11. Polyamide elastomer according to any of the preceding claims, **characterized in that** the hard-segment units (a) are based exclusively on PA1010, optionally regulated via sebacic acid and/or C36-dimer fatty acid, and the soft-segment units have been formed exclusively from C36-dimerdiol.

12. Polyamide elastomer according to any of the preceding claims, **characterized in that** it comprises, alongside the specified content, additives, preferably less than 10% by weight, based on the total weight of content and additives, with particular preference less than 5% by weight, where the additives have preferably been selected from the group of: stabilizers, UV stabilizers, heat stabilizers, impact modifiers, free-radical scavengers, processing aids, plasticizers, further polymers, and functional additives, preferably for influencing optical properties, such as in particular the refractive index, or a combination or mixture thereof.

13. Polyamide elastomer according to any of the preceding claims, **characterized in that** it includes, alongside the specified content, fillers and/or aggregates and/or functional substances, such as in particular nanoscale fillers, laminar minerals or metal oxides, photochromic dyes, round or flat glass fibres, glass beads, carbon fibres, carbon black, graphite, flame retardants, minerals such as in particular calcium carbonate or barium sulphate, other polymers, preferably polyamides, in particular aliphatic polyamides based on renewable raw materials, and/or impact modifiers, such as in particular functionalized polyolefins.

14. Pellet or article with at least one region or one layer made of a polyamide elastomer according to any of the preceding claims or with a blend with a polyamide elastomer according to any of the preceding claims, with particular preference as constituent of a sports item or of sports footwear or as constituent such as protective covering, gasket, cladding, holder, and/or housing of electrical and/or electronic equipment, in particular of a mobile phone.

15. Process for producing a polyamide elastomer according to any of Claims 1 to 18, **characterized in that**
either
aminocarboxylic acid (a1, a4) and/or lactam (a4) and/or diamine (a3, a6) and dicarboxylic acid (a2, a5), or a salt made of diamine (a3, a6, b4) and dicarboxylic acid (a2, a5), and dimerdiol (b1) and/or polyesterdiol (b2) and/or polyetherdiol (b3) and/or polyetherdiamine (b4), optionally with a catalyst, preferably a phosphorus-containing catalyst, are used as initial charge, are optionally inertized with nitrogen, and are heated, with stirring, to the required reaction temperature, where this temperature is preferably in the range from 220 to 280°C, an esterification catalyst is then added, preferably under atmospheric pressure or reduced pressure, by way of a valve, the pressure is then reduced, preferably to a pressure in the range from 100 to 10 000 Pa (from 1 to 100 mbar) and the system is polycondensed preferably at temperatures of from 220 to 280°C until the desired torque is reached, and the melt is then discharged and pelletized (process A),
or
aminocarboxylic acid (a1, a4) and/or lactam (a4) and/or diamine (a3, a6) and dicarboxylic acid (a2, a5), or a salt made of diamine (a3, a6, b4) and dicarboxylic acid (a2, a5) are used as initial charge, are optionally inertized with nitrogen, and are heated, with stirring, to the required reaction temperature, where this temperature is preferably in the range from 220 to 280°C, and the mixture is polycondensed at the said temperature for from 2 to 4 h with formation of a carboxy-terminated polyamide prepolymer, optionally with the aid of a catalyst, preferably of a phosphorus-containing catalyst, and then a mixture made of dimerdiol (b1) and/or polyesterdiol (b2) and/or polyetherdiol (b3) and/or polyetherdiamine (b4) and optionally of an esterification catalyst is added, preferably under atmospheric pressure or reduced pressure, by way of a valve, and then the pressure is reduced, preferably to a pressure in the range from 100 to 10 000 Pa (from 1 to 100 mbar) and the system is polycondensed preferably at temperatures of from 220 to 280°C until the desired torque is reached, and the melt is then discharged and pelletized (process B), where in the presence of the monomer C36-dimer fatty acid (a2) it is preferable to use process B.

## Revendications

1. Elastomère de polyamide, contenant au moins une part de
(a) 35-95% en poids d'unités de segments durs, formées par
(a1) de l'acide amino-undécanoïque et/ou
(a2) de l'acide azélaïque et/ou de l'acide sébacique et/ou
(a3) de la nonanediamine et/ou de la décanediamine et/ou
(a4) du caprolactame et/ou de l'acide aminocaproïque et/ou du lactame laurique et/ou de l'acide aminolaurique et/ou
(a5) un diacide aliphatique en C₆-C₈ et/ou en C₁₁-C₁₈ et/ou de l'acide téréphtalique et/ou de l'acide isophtalique et/ou
(a6) une diamine aliphatique en C₄-C₈ et/ou en C₁₁-C₁₈ et/ou de la m-xylylènediamine (MXD)
(b) 5-65% en poids d'unités de segments souples, formées par
(b1) un diol dimère en C₃₆ et/ou
(b2) des polyesterdiols à base d'acide gras dimère en C₃₆ et/ou de diol dimère en C₃₆
(b3) un polyétherdiol à base d'oxyde d'éthylène et/ou d'oxyde de propylène et/ou de tétrahydrofuranne et/ou
(b4) une polyétherdiamine à base d'oxyde d'éthylène et/ou d'oxyde de propylène et/ou de tétrahydrofuranne
la proportion bio selon la norme ASTM D6866-06a de cette au moins une part représentant au moins 50% en poids, la somme des composants (a1) à (a6) et (b1) à (b4) valant ensemble 100% en poids, et la somme des composants (a1) à (a3), (b1) et (b2) étant supérieure à 70% en poids et le rapport de la somme de (b1) et (b2) à la somme formée par (b1) à (b4) étant supérieure ou égale à 0,2, la viscosité relative en solution dans du m-crésol, à 0,5% en poids, à 20°C se situant dans la plage de 1,5-2,2, et l'élastomère de polyamide étant formé en tant que polyesteramide transparent et présentant une transmission de la lumière d'au moins 87%, lorsque le polyesteramide se trouve sous forme d'une plaquette mince d'une épaisseur de 2 mm.

2. Elastomère de polyamide selon la revendication 1, **caractérisé en ce que** l'élastomère de polyamide est formé par la part mentionnée et la somme des composants (a1) à (a6) et (b1) à (b4) vaut ensemble 100% en poids, et **en ce que** la somme des composants (a1) à (a3), (b1) et (b2) est supérieure à 50% en poids, ou **en ce que** la somme des composants (a1) à (a3) et (b1) et (b2) est supérieure à 80% en poids ou vaut sensiblement 100% en poids, ou **en ce que** la somme des composants (a2), (a3) et (b1) vaut sensiblement 100% en poids.

3. Elastomère de polyamide selon l'une quelconque des revendications précédentes 1 ou 2, **caractérisé en ce que** la somme des composants (a2), (a3) et (b1) vaut sensiblement 100% en poids, et **en ce que** (a2) est choisi en étant de l'acide sébacique et (a3) en étant de la décanediamine.

4. Elastomère de polyamide selon l'une quelconque des revendications précédentes, **caractérisé en ce que** la somme des composants (a1) à (a6) et (b1) à (b4) vaut ensemble 100% en poids, et la somme de (b1) et (b2) vaut 1 à 65% en poids, de préférence 5 à 65% en poids, en particulier de préférence 10 à 65% en poids.

5. Elastomère de polyamide selon l'une quelconque des revendications précédentes, **caractérisé en ce qu'**il présente une proportion bio selon la norme ASTM D6866-06a d'au moins 70% en poids, de préférence d'au moins 85% en poids, en particulier de préférence d'au moins 95% en poids.

6. Elastomère de polyamide selon l'une quelconque des revendications précédentes, **caractérisé en ce qu'**il est formé de manière sensiblement exclusive des composants (a) et (b) et **en ce que** les unités de segments durs (a) représentent 45-90% en poids, en particulier de préférence 55-85% en poids.

7. Elastomère de polyamide selon l'une quelconque des revendications précédentes, **caractérisé en ce que** les unités de segments durs sont partiellement cristallines et présentent des points de fusion au-dessus de 130°C, de préférence dans la plage de 140-240°C, en particulier de préférence dans la plage de 145-200°C, la température de cristallisation de l'élastomère de polyamide se situant de préférence au plus à 50°C, de préférence au plus à 45°C et en particulier à moins de 40°C au-dessous de la température de fusion.

8. Elastomère de polyamide selon l'une quelconque des revendications précédentes, **caractérisé en ce que** les unités de segments durs sont difonctionnelles et présentent des groupes terminaux COOH, une concentration de groupes terminaux se situant de préférence dans la plage de 200-4000 mmoles/kg, en particulier de préférence dans la plage de 400-3000 mmoles/kg.

9. Elastomère de polyamide selon l'une quelconque des revendications précédentes, **caractérisé en ce que** pour le réglage de la masse molaire des unités de segments durs, seuls des diacides du groupe (a2) sont utilisés, de préférence choisis exclusivement comme étant de l'acide sébacique.

10. Elastomère de polyamide selon l'une quelconque des revendications précédentes, **caractérisé en ce qu'**il est exempt de MACM ou d'autres diamines cycloaliphatiques.

11. Elastomère de polyamide selon l'une quelconque des revendications précédentes, **caractérisé en ce que** les unités de segments durs (a) sont formées exclusivement à base de PA1010, le cas échéant régulé par de l'acide sébacique et/ou de l'acide gras dimère en C₃₆, et les unités de segments souples sont formées exclusivement à partir de diol dimère en C_{36.}

12. Elastomère de polyamide selon l'une quelconque des revendications précédentes, **caractérisé en ce qu'**il contient, outre la part mentionnée, des additifs, de préférence moins de 10% en poids par rapport au poids total de la part et des additifs, en particulier de préférence moins de 5% en poids, les additifs étant de préférence choisis dans le groupe : stabilisateurs, stabilisateurs des UV, stabilisateurs thermiques, agents de modification de résilience, pièges de radicaux, adjuvants de transformation, plastifiants, autres polymères, additifs fonctionnels, de préférence pour influencer les propriétés optiques telles qu'en particulier l'indice de réfraction ou des combinaisons ou des mélanges de ceux-ci.

13. Elastomère de polyamide selon l'une quelconque des revendications précédentes, **caractérisé en ce qu'**il contient, outre la proportion mentionnée, des charges et/ou des adjuvants et/ou des substances fonctionnelles, tels qu'en particulier des charges d'une taille à l'échelle du nanomètre, des minéraux à couches ou des oxydes métalliques, des colorants photochromes, des fibres de verre rondes ou plates, des billes de verre, des fibres de carbone, de la suie, du graphite, des agents ignifuges, des minéraux tels qu'en particulier le carbonate de calcium ou le sulfate de baryum, d'autres polymères, de préférence des polyamides, en particulier des polyamides aliphatiques à base de matières premières renouvelables, des agents de modification de la résilience, tels qu'en particulier des polyoléfines fonctionnalisées.

14. Granulat ou objet présentant au moins une zone ou une couche en élastomère de polyamide selon l'une quelconque des revendications précédentes ou présentant un mélange contenant un élastomère de polyamide selon l'une quelconque des revendications précédentes, en particulier de préférence en tant qu'élément d'un article de sport ou d'une chaussure de sport ou en tant qu'élément tel qu'un recouvrement, un joint, un revêtement, une fixation et/ou un boîtier d'un appareil électrique et/ou électronique, en particulier d'un téléphone mobile.

15. Procédé pour la fabrication d'un élastomère de polyamide selon l'une quelconque des revendications 1 à 18, **caractérisé en ce que** soit
- on dispose au préalable un acide aminocarboxylique (a1, a4) et/ou un lactame (a4) et/ou une diamine (a3, a6) et un acide dicarboxylique (a2, a5), ou un sel de diamine (a3, a6, b4) et d'acide dicarboxylique (a2, a5), et un diol dimère (b1) et/ou un polyesterdiol (b2) et/ou un polyétherdiol (b3) et/ou une polyétherdiamine (b4), le cas échéant avec un catalyseur, de préférence un catalyseur phosphoré, le cas échéant on rend inerte avec de l'azote et on chauffe sous agitation à la température de réaction nécessaire, cette température se situant de préférence dans la plage de 220-280°C, puis on ajoute un catalyseur d'estérification, de préférence sous pression normale ou pression réduite via une trémie, puis on réduit la pression, de préférence à une pression dans la plage de 100-10 000 Pa (1-100 mbars) et on polycondense de préférence à des températures de 220-280°C jusqu'à ce qu'on atteigne le couple de rotation souhaité, puis on évacue la masse fondue et on granule (procédé A), soit
- on dispose au préalable un acide aminocarboxylique (a1, a4) et/ou un lactame (a4) et/ou une diamine (a3, a6) et un acide dicarboxylique (a2, a5), ou un sel de diamine (a3, a6, b4) et d'acide dicarboxylique (a2, a5), le cas échéant on rend inerte avec de l'azote et on chauffe sous agitation à la température de réaction nécessaire, cette température se situant de préférence dans la plage de 220-280°C, et on polycondense pendant 2-4 h à cette température en formant un prépolymère de polyamide terminé par carboxyle, le cas échéant à l'aide d'un catalyseur, de préférence d'un catalyseur phosphoré, puis on ajoute un mélange de diol dimère (b1) et/ou de polyesterdiol (b2) et/ou de polyétherdiol (b3) et/ou de polyétherdiamine (b4) et le cas échéant un catalyseur d'estérification, de préférence sous pression normale ou pression réduite via une trémie, puis on réduit la pression, de préférence à une pression dans la plage de 100-10 000 Pa (1-100 mbars) et on polycondense de préférence à des températures de 220-280°C jusqu'à ce qu'on atteigne le couple de rotation souhaité, puis on évacue la masse fondue et on granule (procédé B),
le procédé B étant de préférence utilisé en présence du monomère acide gras dimère en C₃₆ (a2).
